# FASCICULE DE BREVET EUROPEEN

(11) **EP 2 232 476 B1**
(45) Date de publication et mention de la délivrance du brevet: **29.08.2018**
(21) Numéro de dépôt: 08862777.3
(22) Date de dépôt: 15.12.2008
(51) Int. Cl.: G09G 5/393

(54) **DISPOSITIF D'AFFICHAGE ET PROCEDE D'OPTIMISATION DE LA BANDE PASSANTE MEMOIRE**
ANZEIGEVORRICHTUNG UND VERFAHREN ZUR OPTIMIERUNG EINES SPEICHERPASSBANDS
DISPLAY DEVICE AND METHOD FOR OPTIMISING MEMORY PASS-BAND

(30) Priorité: 18.12.2007 FR 0708845
(43) Date de publication de la demande: 29.09.2010
(73) Titulaire: THALES, 92400 Courbevoie (FR)
(72) Inventeur: LEVASSEUR, Nicolas, F-33610 Cestas (FR); JARDIN, Laurent, F-33127 Saint Jean d'Illac (FR); VERBEQUE, Jean-René, F-33160 Saint Aubin de Medoc (FR)
(74) Mandataire: Esselin, Sophie
(86) Numéro de dépôt international: PCT/EP2008/067554
(87) Numéro de publication internationale: WO 2009/077503

(56) Documents cités:
- EP-A- 1 287 494
- US-A1- 2002 085 013
- US-A1- 2002 140 685
- US-A1- 2005 152 211
- US-A1- 2005 246 433

## Description

Le domaine de l'invention concerne les dispositifs d'affichage pour aéronef et plus particulièrement la gestion des accès mémoire entre un microprocesseur graphique et la mémoire trame dédiée. Plus généralement, l'invention s'applique à tout dispositif d'affichage.

Les dispositifs d'affichage fonctionnent sur des architectures graphiques, connues de l'homme du métier, à base de circuits intégrés logiques de type FPGA, « Field Programmable Gate Array », selon la dénomination anglo-saxonne, ou de type ASIC, « Application Specific Integrated Circuit ». Ces composants, appelés GPU (« Graphical Processor Unit »), sont des circuits intégrés dédiés à la génération graphique réalisant des fonctions de génération de formes graphiques de base comme un triangle, une ligne ou un point. Ces formes sont appelées primitives. Les GPU sont généralement accompagnés de mémoire trame, aujourd'hui habituellement de type DDR (« Dual Data Rate »), qui contient les pixels qui sont affichés à l'écran. C'est dans cette mémoire tampon qu'ils sont enregistrés juste avant d'être affichés à l'écran. Dans ce type d'architecture, toutes les images sont obligatoirement transférées du GPU à la mémoire. Les architectures matérielles supportent maintenant des débits élevés autorisant la génération de flux d'images de meilleure qualité et de taille plus importante.

Cependant, le domaine de l'aéronautique est sujet à des normes de fiabilité des circuits électroniques extrêmement sévères. Les composants électroniques doivent généralement faire preuve d'un taux de probabilité d'erreur inférieur à 1.10⁻⁹ par heure de vol. C'est pourquoi les architectures utilisées dans ce domaine n'exploitent pas les systèmes électroniques jusqu'à à la limite des performances technologiques. Les concepteurs cherchent plutôt à optimiser d'un point de vue de sécurité les applications en limitant les besoins en bande-passante. La problématique générale est donc de surpasser cette limitation de la bande-passante entre le GPU et la mémoire trame pour les fonctions de génération graphique.

Un système de génération d'images synthétiques, c'est à dire que les images sont constituées de primitives, est composé d'au moins deux sous-fonctions : une fonction de génération de l'image, qui consiste à écrire dans un espace mémoire dédié les informations propres à chaque pixel, et une fonction d'affichage de l'image, qui consiste à relire les informations propres à chaque pixel pour piloter un dispositif vidéo.

Les GPU travaillent en général avec plusieurs espaces mémoire trame, typiquement deux, appelés pages. Lorsque qu'une page est utilisée par la fonction d'affichage, l'autre page est disponible pour la fonction de génération de l'image. Ces pages peuvent être physiques, c'est-à-dire réparties sur des ressources matérielles distinctes, ou logiques, c'est-à-dire réparties sur des ressources matérielles communes. Les pages logiques sont très largement préférées aujourd'hui car plus économiques en ressources matérielles. Il en résulte que la bande passante mémoire doit être partagée entre la fonction de génération de l'image et la fonction d'affichage de l'image. En outre toute génération d'image doit aussi commencer par un effacement complet.

Il existe de nombreuses techniques, à base de mémoires tampon, qui permettent de réduire la bande passante mémoire nécessaire pour la génération de l'image. Par contre, ces techniques sont inefficaces pour la fonction d'affichage et d'effacement car la mémoire trame est accédée linéairement et dans sa totalité. Les mémoires tampon, intégrées aux GPU, offrent des débits plus importants que les mémoires trame, cependant elles sont limitées en capacités et ne permettent donc pas de remplacer les mémoires trames.

Le problème majeur non résolu par l'état de la technique est que la bande passante mémoire nécessaire à un système graphique n'est pas proportionnelle à la complexité de l'image générée. Généralement pour les applications aéronautiques, les images sont majoritairement composées d'un fond noir ou transparent selon que le type de visualisation est à base d'écrans à cristaux liquides ou à projections holographiques. L'image comporte généralement des symboles simples comme dans l'exemple des afficheurs de plans de vol ou des interfaces de fonctions de vol.

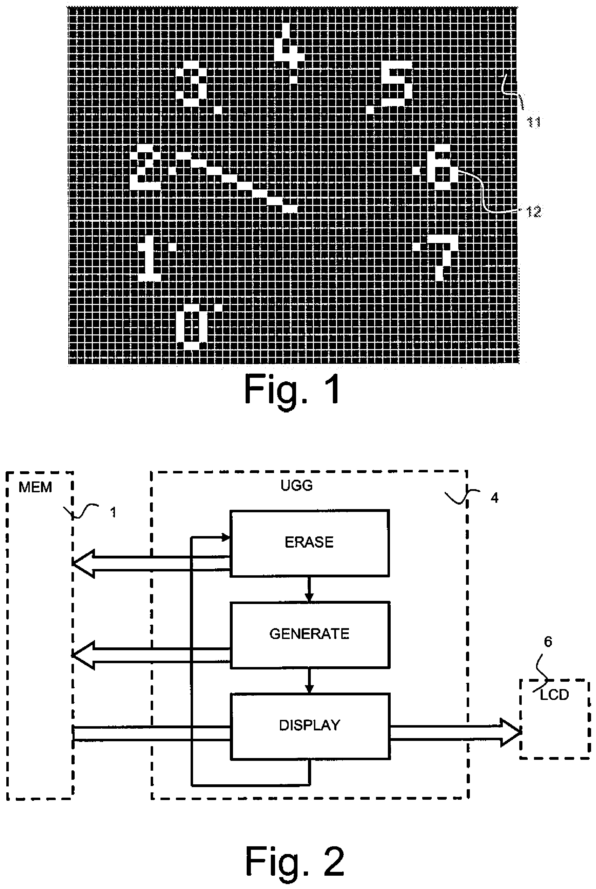

La figure 1 représente une image majoritairement constituée de quelques symboles en pixels noirs sur un fond uniforme ; seuls 1,44% des accès mémoire sont utilisés pour le tracé. Le procédé de génération d'une image consiste à exécuter dans un premier temps un effacement complet de la mémoire trame, puis la fonction de génération de l'image et ensuite la fonction d'affichage de l'image. Dans cet exemple selon la figure 2, la fonction de génération de l'image accède à la mémoire trame 1 en mode normal, c'est à dire pixel par pixel, pour écrire l'information relative à chaque pixel.

Dans l'exemple de la figure 1, l'image comporte 110 pixels 12 contenant une information et les autres pixels 11 représentent le fond de l'image. Selon la figure 2, lorsque l'unité de génération graphique 4 réalise la fonction d'effacement « ERASE » et celle d'affichage de l'image « DISPLAY », la mémoire trame 1 doit être accédée en totalité et linéairement pour lire l'ensemble des pixels de l'image et piloter l'écran 6. Pour le tracé de l'image dans la mémoire 1, la fonction « GENERATE » écrit uniquement les pixels 12 dans la mémoire 1. Pour l'image selon la figure 1, le bilan en quantité de données du transfert entre le GPU et la mémoire trame pour la génération d'une image est :
- Effacement : 64x48 = 3072 pixels
- Tracé : 110 pixels
- Fonction affichage : 64x48 = 3072pixels
Soit un nombre total de mots accédés par trame de 6254.

Plus précisément, l'invention concerne un dispositif d'affichage comportant un écran de visualisation et une unité de génération graphique réalisant au moins trois fonctions pour afficher une image, une première fonction d'effacement de données, une deuxième fonction de génération d'une image composée de pixels dans une première mémoire et une troisième fonction d'affichage de l'image lisant lesdits pixels dans ladite mémoire et pilotant l'écran, caractérisé en ce qu'une image est divisée en plusieurs zones distinctes de pixels et chaque zone est adressée par un drapeau, et le dispositif d'affichage comporte également une seconde mémoire enregistrant l'état des drapeaux permettant à l'unité de génération graphique d'exécuter la fonction d'affichage en fonction de l'état des drapeaux, les drapeaux ayant deux états :
- un premier état si la zone de pixels adressée comporte au moins un pixel qui a été modifié par la fonction de génération de l'image ;
- un second état si aucun pixel de la zone de pixels adressée n'a été modifié par la fonction de génération de l'image.

L'invention concerne un dispositif d'affichage et un procédé de génération d'image permettant d'optimiser la bande passante entre l'unité de génération graphique, généralement appelée GPU dans le domaine des cartes graphiques, et la mémoire trame associée. L'invention est avantageuse car elle dispose d'un moyen de gestion optimisé de la bande passante des accès mémoire pour la génération d'une image. Le débit des données nécessaire à la génération d'une image est proportionnel à la complexité de l'image. Ainsi pour des images simples, le nombre d'accès entre le GPU et la mémoire trame est aussi plus faible.

L'invention est notamment avantageuse pour les dispositifs d'affichage présentant sur l'écran des images comportant un fond uniforme et prédominant. Elle est particulièrement destinée aux applications du domaine aéronautique puisque les afficheurs de vol doivent en effet présenter des images simples. Par exemple sur les afficheurs de plan de vol ou les interfaces des applications, les données critiques sont généralement présentées sur un fond globalement uniforme.

L'invention sera mieux comprise et d'autres avantages apparaîtront à la lecture de la description qui va suivre donnée à titre non limitatif et grâce aux figures annexées parmi lesquelles :
La figure 1 représente un type d'image généralement affichée sur les planches de bord d'un aéronef.
La figure 2 représente un organigramme du déroulement des étapes selon l'art antérieur pour la génération d'une image.
La figure 3 représente une architecture matérielle du dispositif selon l'invention.
La figure 4 représente un organigramme du déroulement des étapes pour la génération d'une image selon l'invention.
La figure 5 représente un exemple de partition spatiale d'une image selon l'invention.
La figure 6 représente un cas d'écriture de pixels et la gestion des drapeaux associés.

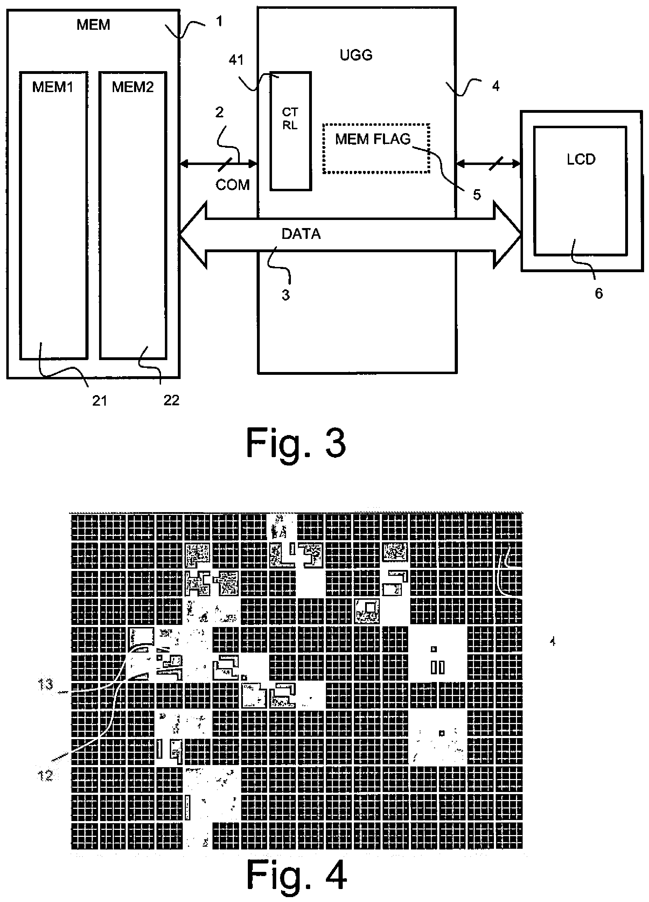

A titre d'exemple non limitatif, la figure 3 illustre une unité de génération graphique 4 communiquant avec une première mémoire trame 1 et un écran LCD 6. Selon l'invention, dans un premier mode de mise en oeuvre l'unité de génération graphique 4 intègre une seconde mémoire 5. Dans un second mode de mise en oeuvre cette mémoire 5 peut être intégrée à la mémoire trame 1. Cette second mémoire contient les drapeaux codant les états des zones de pixels qu'ils adressent. Dans le premier mode de mise en oeuvre, cette mémoire est dite cache, c'est-à-dire qu'elle est de capacité en données plus faible mais présente des performances meilleures que la mémoire trame. L'unité de génération graphique 4 travaille avec plusieurs espaces mémoires, typiquement deux espaces mémoires appelés pages. Ces espaces mémoires 21 et 22 sont répartis sur une mémoire commune, la mémoire trame 1 de type DDR. Cette mémoire communique avec l'unité de génération graphique par un bus de données symbolisé sur la figure 3 par un bus « DATA » 3 et par un bus de commande symbolisé sur la même figure par un bus « COM » 2. Ce bus « COM » représente, par soucis de simplification, le bus d'adresse et les signaux de commande pilotés par l'unité de génération graphique. Ces signaux de commande sont générés par un contrôleur mémoire 41 dont la tâche est de piloter les accès mémoire.

En référence à la figure 4, qui reprend la même image que celle de la figure 1, l'invention consiste à réaliser une division spatiale d'une image en zones de pixels. Dans cet exemple à titre non limitatif, l'image comporte 3072 pixels et est divisée en 192 zones de 16 pixels. Chaque zone est adressée par un drapeau et chaque drapeau représente deux états. Durant l'exécution de génération d'une image, des informations de pixels sont écrites dans la mémoire trame 1 comme c'est le cas pour le pixel 12. Lors de l'exécution de cette fonction le drapeau de la zone 13 est mis à un état signalant qu'au moins un des pixels de la zone 13 a été écrit pendant le tracé de l'image. Finalement, suite à la fonction de génération de l'image, toutes les zones de pixels comportant au moins un pixel ayant été écrit présentent un drapeau dans un état signalant que la zone de pixel a été écrite. Les zones ne comportant que des pixels codant le fond de l'image comme le pixel 11 ont leur drapeau dans un état signalant qu'elles n'ont pas été écrites, comme c'est le cas pour la zone 14. L'invention consiste donc à détecter les zones de pixels écrites dans la première mémoire 1 durant l'exécution de la fonction de tracé de l'image et à enregistrer ces informations dans la deuxième mémoire 5. Le codage des états de zones de pixels ne requière pas une quantité de mémoire élevée car un état peut être codé sur uniquement un bit de donnée. C'est pourquoi une mémoire cache peut être utilisée pour enregistrer les drapeaux. La fonction réalisant la détection de pixels écrits est connue de l'homme du métier et peut être réalisée par le contrôleur mémoire 41.

En référence à la figure 2, la génération d'une image selon un procédé classique consiste à réaliser dans un premier temps un effacement complet de l'image contenue dans un des espaces mémoires 21 et 22, d'écrire les informations relatives aux pixels dans le même espace mémoire puis ensuite de lire ces informations et piloter l'écran de visualisation 6.

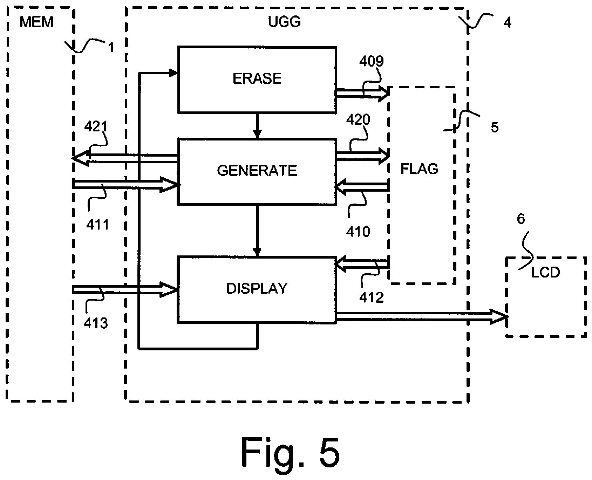

La figure 5 représente un procédé de génération de l'image selon l'invention. Les flèches en trait large représentent des opérations matérielles de l'invention comme des accès lecture et écriture dans la mémoire trame 1 et la mémoire drapeau 5. Les flèches en trait fin représentent les changements d'étapes du procédé. Ce procédé comporte les étapes suivantes:
- A une première étape « ERASE », l'unité de génération graphique 4 réalise une fonction d'effacement des drapeaux de la deuxième mémoire 5, les drapeaux sont alors codés dans le second état durant l'accès 409 ;
- A une deuxième étape « GENERATE », l'unité de génération graphique 4 exécute la fonction de génération de l'image, accès 421, dans la première mémoire 1 et code en parallèle durant l'accès 420 dans la seconde mémoire 5 l'état des drapeaux des zones de pixels écrites, l'état des drapeaux étant codé dans le premier état ;
- A une troisième étape « DISPLAY », l'unité de génération graphique 4 exécute la fonction d'affichage, consultant à la fois la mémoire drapeau durant l'accès 412, qui lit, accès 413, dans la première mémoire 1 les zones de pixels 13 dont le drapeau est dans le premier état et donne une valeur par défaut aux pixels des zones 14 dont le drapeau est dans le second état.

Ce procédé est remarquable car il utilise les mêmes fonctions que les procédés de génération d'image classique, sauf qu'elles sont appliquées sur des éléments électroniques différents. Le procédé selon l'invention permet de diminuer le nombre d'accès à la première mémoire trame 1. En effet, l'invention consiste à optimiser le nombre d'accès en ne lisant dans la mémoire trame 1 que les zones de pixels écrites durant la fonction de génération de l'image. Lorsqu'une zone de pixel n'est pas écrite dans la mémoire trame 1, cela signifie que ce pixel représente le fond de l'image et a donc une valeur connue.

Avantageusement, la valeur par défaut attribuée par la fonction d'affichage aux zones de pixels dont le drapeau est dans le second état est la valeur qui code la trame de fond de l'image. Ainsi l'unité de génération graphique 4 est capable de générer la valeur des zones de pixels codant le fond de l'image, permettant alors de ne pas lire la mémoire trame 1. Un moyen de lire uniquement les zones de pixels écrits dans la mémoire trame 1 est d'utiliser un moyen de détection et de signalisation des zones de pixels écrits. Il s'agit de la fonction remplit par la deuxième mémoire 5 qui enregistre des drapeaux dans un premier état quand une zone de pixel a été écrite et dans un second état lorsqu'aucun des pixels de la zone a été écrit.

Ce moyen de détection de zones de pixels accédées pendant l'étape de génération de l'image permet en même temps de ne plus effacer directement l'image et ainsi de réduire le nombre d'accès à la mémoire trame 1. En effet, en effaçant la mémoire drapeau 5 à la place de l'image contenue dans la mémoire trame 1, on met les drapeaux à une valeur signalant à l'unité de génération graphique que l'image dans la mémoire trame 1 a été effacée. Par conséquent, la première étape d'effacement « ERASE » n'exécute aucun accès mémoire dans la mémoire trame 1. Dans le mode de mise en oeuvre selon lequel la mémoire 5 est intégrée à la mémoire trame 1, le nombre d'accès pour effacer les drapeaux est plus faible que pour effacer une image car il s'agit d'effacer des zones de pixels.

Avantageusement, lorsqu'une image est tracée, les drapeaux des zones touchées sont positionnés. Pendant cette étape, tous les pixels de la zone sont écrits. Même les pixels codant le fond de l'image car tous les pixels d'une zone où le drapeau est positionné sont lus. On réalise de cette manière un effacement ciblé pour effacer les pixels de l'image précédente se trouvant dans la zone qui va être lue à l'étape suivante.

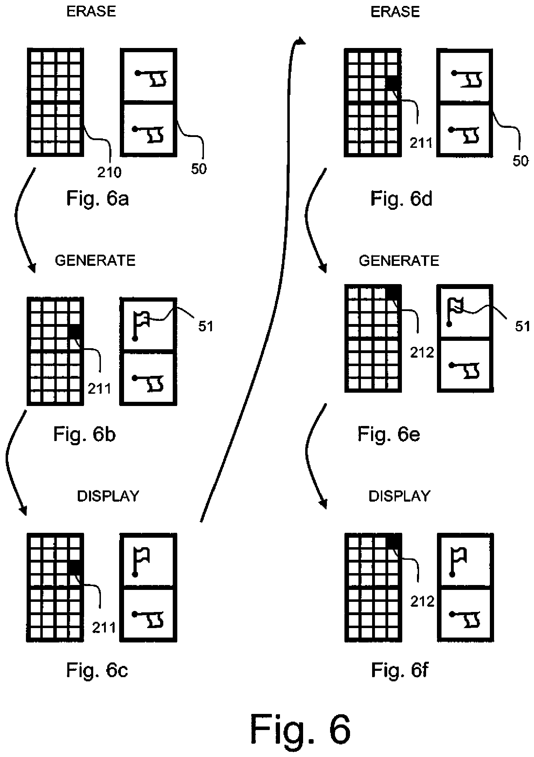

La figure 6 illustre le cas où un pixel est écrit dans la même zone qu'un pixel de l'image précédente et où le pixel de l'image précédente n'est pas réécrit. Les figures 6a, 6b et 6c illustre une « image n » et les figures 6d, 6e et 6f une « image n+1 » dans le même espace mémoire. A titre d'exemple non limitatif, on étudie le cas d'une portion d'image 210 de 32 pixels comportant deux zones de pixels de 16 pixels. A la figure 6a, cette partie est vierge et l'unité de génération graphique exécute l'effacement de la partie 50 de la mémoire drapeau 5. Ensuite, l'unité de génération graphique exécute la fonction de génération de l'image durant laquelle un pixel 211 est écrit. Le drapeau 51 de cette zone est positionné dans le premier état. A la figure 6c, l'unité de génération graphique affiche la zone du pixel 211 et attribue la valeur codant le fond de l'image aux pixels des autres zones de pixels. Pour la génération de l'image suivante dans le même espace mémoire, l'unité de génération graphique réalise un effacement de la mémoire drapeau 50. La figure 6d montre que le pixel 211 de l'image précédente est toujours présent dans la mémoire trame car celle-ci n'a pas été effacée. La figure 6e illustre la génération de l'image suivante. Tous les pixels de la zone sont écrits et donc efface le pixel de l'image précédente. Un nouveau pixel 212 est écrit dans la mémoire trame et le drapeau 51 est positionné. Le pixel 211 est effacé car la fonction de génération écrit un pixel codant le fond de l'image sur le pixel 211. La figure 6f montre que la fonction d'affichage durant la troisième étape « DISPLAY » n'affiche pas le pixel de l'image précédente.

En référence à la figure 4, on dénombre 40 zones de pixels écrites comme la zone 13 pendant la fonction de génération de l'image. Le bilan du nombre d'accès à la mémoire trame 1 est donc le suivant :
- Effacement : 0 pixel
- Tracé: 40*16 =640 pixels
- Fonction affichage: 40*16 = 640 pixels
Soit un nombre total de mots accédés par trame de: 1280.

Selon le type de la mémoire utilisée, il est aussi possible de réaliser des accès mémoire en mode « burst », ou selon la terminologie française mode en rafales, c'est à dire que, dans le cas de l'écriture d'une image par exemple, plusieurs pixels sont écrits dans la mémoire suite à une même consigne d'écriture. Ce type de transfert est avantageux car il permet d'augmenter la bande passante des transferts de données entre le GPU et la mémoire. Dans un mode de mise en oeuvre, la première mémoire dispose d'un mode d'accès des données en rafales ; la taille des données de la zone de pixels adressée par un drapeau est égale à un multiple entier de la taille des données accédées dans un cycle du mode rafale de la mémoire. En effet, l'invention tire avantage de ce mode d'accès car l'invention nécessite que les pixels d'une zone entière soient écrits. Il est clair que la mémoire utilisée ne se limite pas à celle de type DDR.

Selon la figure 5, à la deuxième étape « GENERATE », la mémoire drapeau 5 est écrite, lors de l'accès 420, pour modifier les drapeaux des zones de pixels de l'image écrites dans la mémoire trame 1 pendant l'accès 421. La mémoire drapeau 5 peut aussi être lue, lors d'un accès 410, lorsqu'un pixel est écrit dans une zone de pixels qui a déjà été écrite. En effet, dans le cas d'images affichées en transparence, l'unité de génération graphique lit dans un premier temps pendant l'accès 411, les pixels déjà écrits, pour composer l'image en transparence en superposant la deuxième trame à la première trame.

L'invention peut s'appliquer à des dispositifs d'affichage à écran LCD comme à des dispositifs d'affichage de type à projection holographique, notamment aux dispositifs dit viseurs tête haute.

Il est clair que l'invention ne se limite pas à une technologie d'écran de visualisation particulière. Elle peut être appliquée avec des écrans LED (diodes électroluminescentes), OLED (diodes électroluminescentes organiques) et CRT (écran à tube cathodique) par exemple.

## Revendications

1. Procédé de génération d'image pour un dispositif d'affichage comportant un écran de visualisation (6) et une unité de génération graphique (4) réalisant au moins trois fonctions pour afficher une image, une première fonction d'effacement, une deuxième fonction de génération d'une image composée de pixels dans une première mémoire (1) et une troisième fonction d'affichage de l'image pilotant l'écran (6), une image est divisée en plusieurs zones distinctes de pixels et chaque zone est adressée par un drapeau, et le dispositif d'affichage comporte également une seconde mémoire (5) enregistrant l'état des drapeaux permettant à l'unité de génération graphique (4) d'exécuter la fonction d'affichage en fonction de l'état des drapeaux, la première fonction d'effacement étant une fonction d'effacement des drapeaux de la seconde mémoire (5), le procédé étant **caractérisé en ce que** les drapeaux codent deux états des zones de pixels :
• un premier état si la zone de pixels adressée comporte au moins un pixel qui a été écrit par la fonction de génération de l'image ;
• un second état si aucun pixel de la zone de pixels adressée n'a été écrit par la fonction de génération de l'image, ce second état permettant à la fonction d'affichage d'attribuer une valeur par défaut aux pixels de la zone, la valeur par défaut attribuée par la fonction d'affichage aux zones de pixels (14) dont le drapeau est dans le second état étant la valeur qui code la trame de fond de l'image,
le procédé comprenant les étapes suivantes :
• A une première étape « ERASE », l'unité de génération graphique (4) réalise la première fonction d'effacement (409) des drapeaux de la deuxième mémoire (5), les drapeaux sont alors codés dans le second état ;
• A une deuxième étape « GENERATE », l'unité de génération graphique (4) exécute la deuxième fonction de génération de l'image (421) dans la première mémoire (1) et code en parallèle (420) dans la seconde mémoire (5) l'état des drapeaux des zones de pixels écrites, l'état des drapeaux étant codé dans le premier état ;
• A une troisième étape « DISPLAY », l'unité de génération graphique (4) exécute la fonction d'affichage qui, en consultant la mémoire drapeau (412), lit (413), dans la première mémoire (1) les zones de pixels (13) dont le drapeau est dans le premier état et donne la valeur par défaut aux pixels des zones (14) dont le drapeau est dans le second état, la fonction d'affichage lisant dans la première mémoire uniquement les zones des pixels dont le drapeau est dans le premier état.

2. Procédé selon la revendication précédente, **caractérisé en ce que** la première mémoire (1) dispose d'un mode d'accès des données en rafales ; la taille des données de la zone de pixels (13) adressée par un drapeau est égale à un multiple entier de la taille des données accédées dans un cycle du mode rafale de la mémoire (1).

3. Dispositif d'affichage d'aéronef réalisant le procédé selon l'une quelconque des revendications précédentes.

4. Dispositif d'affichage selon la revendication 3, **caractérisé en ce que** la deuxième mémoire (5) est intégrée à l'unité de génération d'image (4).

5. Dispositif d'affichage selon la revendication 3, **caractérisé en ce que** la deuxième mémoire (5) est intégrée à la première mémoire (1).

6. Dispositif d'affichage selon l'une quelconque des revendications 3 à 5, **caractérisé en ce qu'**il est de type à projection holographique.

## Patentansprüche

1. Verfahren zum Erzeugen eines Bildes für ein Anzeigegerät, das einen Anzeigebildschirm (6) und eine Grafikerzeugungseinheit (4) zum Durchführen von wenigstens drei Funktionen zum Anzeigen eines Bildes umfasst, eine erste Löschfunktion, eine zweite Funktion zum Erzeugen eines Bildes, zusammengesetzt aus Pixeln in einem ersten Speicher (1), und eine dritte Funktion des Anzeigens des Bildes zum Steuern des Bildschirms (6), wobei ein Bild in mehrere getrennte Zonen von Pixeln unterteilt ist und jede Zone von einem Flag adressiert wird, und das Anzeigegerät ferner einen zweiten Speicher (5) zum Speichern des Zustands der Flags umfasst, so dass die Grafikerzeugungseinheit (4) die Anzeigefunktion in Abhängigkeit vom Zustand der Flags ausführen kann, wobei die erste Löschfunktion eine Funktion des Löschens von Flags aus dem zweiten Speicher (5) ist, wobei das Verfahren **dadurch gekennzeichnet ist, dass** die Flags zwei Zustände der Pixelzonen codieren:
• einen ersten Zustand, wenn die adressierte Pixelzone wenigstens ein Pixel umfasst, das von der Bilderzeugungsfunktion geschrieben wurde;
• einen zweiten Zustand, wenn kein Pixel der adressierten Pixelzone von der Bilderzeugungsfunktion geschrieben wurde, wobei es dieser zweite Zustand der Anzeigefunktion gestattet, den Pixeln der Zone einen Vorgabewert zuzuordnen, wobei der Vorgabewert, der von der Anzeigefunktion den Pixelzonen (14) zugeordnet wird, für die der Flag im zweiten Zustand ist, der Wert ist, der den Hintergrund-Frame des Bildes codiert;
wobei das Verfahren die folgenden Schritte beinhaltet:
• einen ersten "ERASE"-Schritt, in dem die Grafikerzeugungseinheit (4) die erste Funktion (409) des Löschens der Flags aus dem zweiten Speicher (5) ausführt, dann werden die Flags im zweiten Zustand codiert;
• einen zweiten "GENERATE"-Schritt, in dem die Grafikerzeugungseinheit (4) die zweite Bilderzeugungsfunktion (421) im ersten Speicher (1) ausführt und parallel (420) im zweiten Speicher (5) den Zustand der Flags der beschriebenen Pixelzonen codiert, wobei der Zustand der Flags im ersten Zustand codiert wird;
• einen dritten "DISPLAY"-Schritt, in dem die Grafikerzeugungseinheit (4) die Anzeigefunktion ausführt, die unter Bezugnahme auf den Flag-Speicher (412) im ersten Speicher (1) die Pixelzonen (13) liest (413), deren Flag im ersten Zustand ist, und den Vorgabewert den Pixeln der Zonen (14) gibt, deren Flag im zweiten Zustand ist, wobei die Anzeigefunktion im ersten Speicher nur die Pixelzonen liest, deren Flag im ersten Zustand ist.

2. Verfahren nach dem vorherigen Anspruch, **dadurch gekennzeichnet, dass** der erste Speicher (1) einen Burst-Datenzugangsmodus hat, wobei die Größe der Daten der von einem Flag adressierten Pixelzone (13) gleich einem ganzzahligen Vielfachen der Größe der Daten ist, auf die in einem Zyklus des Burst-Modus des Speichers (1) zugegriffen wird.

3. Flugzeuganzeigegerät, das das Verfahren nach einem der vorherigen Ansprüche durchführt.

4. Anzeigegerät nach Anspruch 3, **dadurch gekennzeichnet, dass** der zweite Speicher (5) in die Bilderzeugungseinheit (4) integriert ist.

5. Anzeigegerät nach Anspruch 3, **dadurch gekennzeichnet, dass** der zweite Speicher (5) in den ersten Speicher (1) integriert ist.

6. Anzeigegerät nach einem der Ansprüche 3 bis 5, **dadurch gekennzeichnet, dass** es vom holographischen Projektionstyp ist.

## Claims

1. A method for generating an image for a display device comprising a display screen (6) and a graphics generation unit (4) performing at least three functions for displaying an image, a first function of erasing , a second function of generating an image made up of pixels in a first memory (1) and a third function of displaying the image and of controlling the screen (6), an image is divided into a plurality of distinct zones of pixels and each zone is addressed by a flag, and the display device further comprises a second memory (5) saving the state of the flags allowing the graphics generation unit (4) to execute the display function as a function of the state of the flags, the first function of erasing being a function of erasing from the second memory (5), the method being **characterised in that** the flags encode two states of the pixel zones:
• a first state if the addressed pixel zone comprises at least one pixel that has been written by the image generation function;
• a second state if no pixel of the addressed pixel zone has been written by the image generation function, this second state allowing the display function to assign a default value to the pixels of the zone, the default value assigned by the display function to the pixel zones (14) for which the flag is in the second state being the value that encodes the background frame of the image;
the method comprising the following steps:
• in a first "ERASE" step, the graphics generation unit (4) performs the first function of erasing (409) flags from the second memory (5), the flags are then encoded in the second state;
• in a second "GENERATE" step, the graphics generation unit (4) executes the second function of generating the image (421) in the first memory (1) and at the same time encodes (420), in the second memory (5), the state of the flags of the written pixel zones, the state of the flags being encoded in the first state;
• in a third "DISPLAY" step, the graphics generation unit (4) executes the display function, which, by consulting the flag memory (412), reads (413), in the first memory (1), the pixel zones (13) for which the flag is in the first state and provides the default value to the pixels of the zones (14) for which the flag is in the second state, with the display function reading, only in the first memory, the pixel zones for which the flag is in the first state.

2. The method as claimed in claim 1, **characterised in that** the first memory (1) has a burst data access mode, the size of the data of the pixel zone (13) addressed by a flag is equal to an integer multiple of the size of the data accessed in a cycle of the burst mode of the memory (1).

3. An aircraft display device carrying out the method as claimed in any one of the preceding claims.

4. The display device as claimed in claim 3, **characterised in that** the second memory (5) is integrated in the image generation unit (4).

5. The display device as claimed in claim 3, **characterised in that** the second memory (5) is integrated in the first memory (1).

6. The display device as claimed in any one of claims 3 to 5, **characterised in that** it is of the holographic projection type.
